# EUROPEAN PATENT APPLICATION

(11) **EP 2 028 478 A1**
(43) Date of publication of application: **25.02.2009**
(21) Application number: 08161035.4
(22) Date of filing: 24.07.2008
(51) Int. Cl.: G01N 21/76

(54) **Molecular detection systems and methods**

(30) Priority: 26.07.2007 US 829005
(71) Applicant: Honeywell International Inc., Morristown NJ 07960 (US)
(72) Inventor: Johnson, Russell, Elmhurst, IL 60126 (US); Sanders, Glen A., Scottsdale, AZ 85255 (US)
(74) Representative: Buckley, Guy Julian

(57) **Abstract**

Methods and systems for detecting materials both energetic and non-energetic. An example system passes a sample of fluid through a filter/concentrator (particulate/molecular) (52). Then desorption of the material in the filter/concentrator occurs at a predefined temperature. The desorbed material is analyzed at an optical resonator system (40) to detect presence of a predefined material.

## Description

### BACKGROUND OF THE INVENTION

Many energetic materials (explosives, propellants, and other materials that decompose to produce an overpressure wave, with or without significant generation of heat) are normally solid and have very low vapor pressure. The vapor pressure of many of these materials, such as but not limited to trinitrotoluene (TNT), Hexahydro-Trinitro-Triazine (RDX), and Cyclo tetramethylene tetranitramine (HMX) is sufficiently low to be non-detectable by normal spectroscopic methods. Although optical resonators are designed to be more sensitive than many other devices, the analyte concentration to such a device is still very difficult to detect.

### SUMMARY OF THE INVENTION

The present invention provides methods and systems for detecting materials both energetic and non-energetic. An example system passes a sample of fluid through a filter/concentrator (particulate/molecular). Then desorption of the material in the filter/concentrator occurs at a predefined temperature. The desorbed material is analyzed at an optical resonator system to detect presence of a predefined material.

In one aspect of the invention, a sample of fluid outputted from the filter/concentrator prior to desorbtion is cleaned of a threshold amount of target material, such as nitrogen oxides, using a scrubbing device. The scrubbing device may be a NOx scrubber or it may be a scrubber to remove atmospheric contaminants that would interfere with the quantification of target analytes.

In still another aspect of the invention, the temperature of the desorbed fluid is reduced before passing through the optical resonator system.

### BRIEF DESCRIPTION OF THE DRAWINGS

Preferred and alternative embodiments of the present invention are described in detail below with reference to the following drawings:

FIGURE 1 is a schematic diagram of an example system formed in accordance with an embodiment of the present invention; and

FIGURE 2 is a schematic diagram of an example system formed in accordance with an embodiment of the present invention.

### DETAILED DESCRIPTION OF THE PREFERRED EMBODIMENT

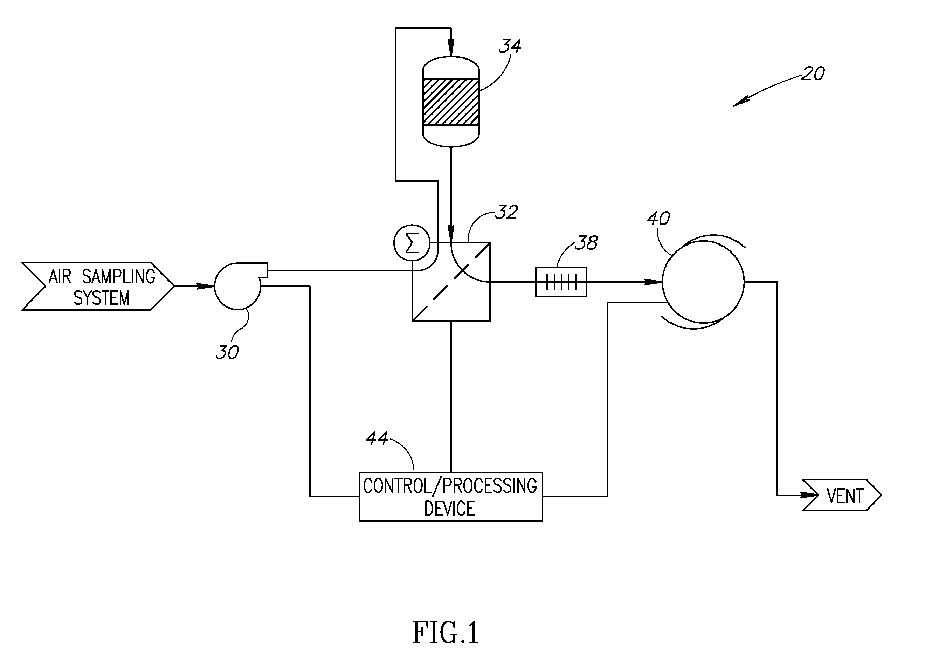

FIGURE 1 illustrates an example system 20 for performing molecular detection. The system 20 is capable of detecting a very small amount of explosive that is present around hidden munitions, such as an improvised explosive device (IED). The system 20 includes a fluid motion generator 30, a filter/heater device 32, a NOx (NO, NO₂) scrubber 34, a heat exchanger 38, and an optical resonator detection component 40. The system 20 is operated in a two-state cycle. The system 20 also includes a control/processing device 44 that is in signal communication with some or all of the components of the system 20. The control/processing device 44 controls operation of the components based operator control inputs and outputs sensor values.

The filter/heater device 32 includes a mechanical filter that separates particulate materials containing analyte from a fluid sample. Although it is anticipated that most samples of interest will be in air or other gas streams, it is also possible to collect particulate material from aqueous or other liquid samples. For example, particulate-bound analytes that the filter will adsorb include but are not limited to particulates containing explosives, biological materials, toxic industrial compounds (TICs), radionuclides, pesticides, and chemical warfare agents. The filter/heater device 32 includes an adsorbent material (filter element) designed to adsorb impurities in the fluid under analysis. For example, analytes that the filter element will adsorb include but are not limited to hydrocarbons, halogenated hydrocarbons such as trichloroethane or perchloroethane, volatile explosives, plasticizers used in explosives, entropic explosives such as triacetone triperoxide (TATP), chemical warfare agents, and toxic industrial materials (TICs). In another embodiment, the filter/heater device 32 includes a demister-absorbent material to remove liquid droplets from a fluid. For example, analytes that demister-absorbent material will adsorb include but are not limited to hydrocarbons, halogenated hydrocarbons such as trichloroethane or perchloroethane, volatile explosives, plasticizers used in explosives, entropic explosives such as triacetone triperoxide (TATP), chemical warfare agents, biological materials such as bacteria and viruses, and toxic industrial materials (TICs).

During the collection phase of the operation, a sample of air is collected from a source by the fluid motion generator 30 (eg. fan, pump) and sent to the filter/heater device 32. The filter/heater device 32 includes a filter element for trapping desired energetic materials. Example filters are provided by Donaldson® and Pall Corporation. The filter/heater device 32 can also include adsorbent materials such as zeolites to collect gas-phase materials. An example of an adsorbent (zeolite) supplier is UOP, LLC. The filter/heater device 32 also includes an internal heater. When the device 32 receives the output of the generator 30, the filter element traps any desired material while the heater is off. After filtering for a predefined period of time, preferably from 1 second to 10 minutes, and most preferably from 5 seconds to 10 seconds, the system 20 is switched to the second phase by the control/processing device 44.

The filtered air is sent to the NOx scrubber 34. The scrubber 34 is designed to remove nitrogen impurities normally present in the stream. The scrubber 34 removes nitrogen oxides (NOx) that are normally present in the air but not associated with particles that contain explosives, thereby producing a zero gravity (NO2 free) air stream. The scrubber 34 outputs the cleaned air to the filter/heater device 32. A heater in the filter/heater device 32 is then activated by the control/processing device 44 to increase the temperature of air in the filter/heater device 32 to a level at which explosive molecules in the filter element will decompose rapidly to form gasses that include nitrogen dioxide and/or nitric oxide. The temperature is controlled during this part of the cycle in a rage of preferably 100° - 650°C, and most preferably from 200° - 300°C. In one embodiment, the scrubber 34 includes a heater for performing scrubbing operations at 250°-300°C. Any source of energy maybe used to provide heat. For example electrical energy, fuel combustion, or vehicle exhaust may be used to provide the heat for the filter/heater device 32.

The adsorbed particles of explosive in the heated filter/heater device 32 are decomposed into decomposition products that contain nitrogen dioxide and/or nitric oxide. Most conventional explosives such as TNT, RDX, HMX, Pentaerythrite Tetraitrate (PETN), nitrocellulose, nitroglycerin, Ammonium Nitrate and Fuel Oil (ANFO), and other nitrogen-containing explosives and propellants will produce nitrogen oxides when thermal decomposition occurs.

In this embodiment, the scrubber 34 and filter/heater device 32 are contained in a common housing (not shown) to minimize the amount of energy required by preventing loss of heat. The decomposed gas is conducted to the optical resonator component 40. An example optical resonator component 40 is described in U.S. Patent Application Serial No. 11/600,386 filed on 11/16/06, which is hereby incorporated by reference. The resonator component 40 includes an optical fiber having a cladding that optically reacts (i.e., changes the optical properties of the optical fiber) when the target molecule is present. The resonator component 40 generates as sensor signal that is sent to the control/processing device 44 for analysis and output and then outputs the received air stream to a vent. In this embodiment, the heat exchanger 38 is a finned tube heat exchanger used to reduce the temperature of the gas sent to the resonator component 40 to prevent damage to the optical resonator component 40. The device 44 controls the temperature of the gas entering the optical resonator component 40, thereby improving accuracy.

The system 20 includes a pressure control device (not shown) that allows the analyte to be collected absorbed for concentration at a high pressure and the concentrated analyte to be removed (desorbed) at a low pressure. One example is adsorption at several atmospheres and desorption at normal atmospheric pressure.

Adsorption is preferably performed at ambient temperature and desorption at a higher temperature, such as 150°C. The filter/heater device 32 removes particulate explosive particles at ambient temperature and performs desorption at a higher temperature, such as 150° - 200°C. A key advantage of using reactive decomposition (reactive decomposition) is that the decomposition products of similar compounds often have the same decomposition products. For example, many classes of conventional explosives decompose into, among other products, nitrogen oxides. This type of desorption is considered pyrolitic desorption. While there are many kinds of nitrogen-containing explosives from several chemical families that would require multiple analytical reagents to be individually identified, they all produce nitrogen dioxide and nitric oxide when heated.

The system 20 may be an air stream system, a water stream system, a stored gas stream system, or an in-situ generated stream system. The stored gas stream system may include a stored gas such as nitrogen, hydrogen, helium, steam, or other fluid capable of providing analyte or decomposition product transport. This is commonly called zero gas. The in-situ generated stream system may use, but is not limited to, nitrogen generated by use of a membrane or pressure-swing adsorption system.

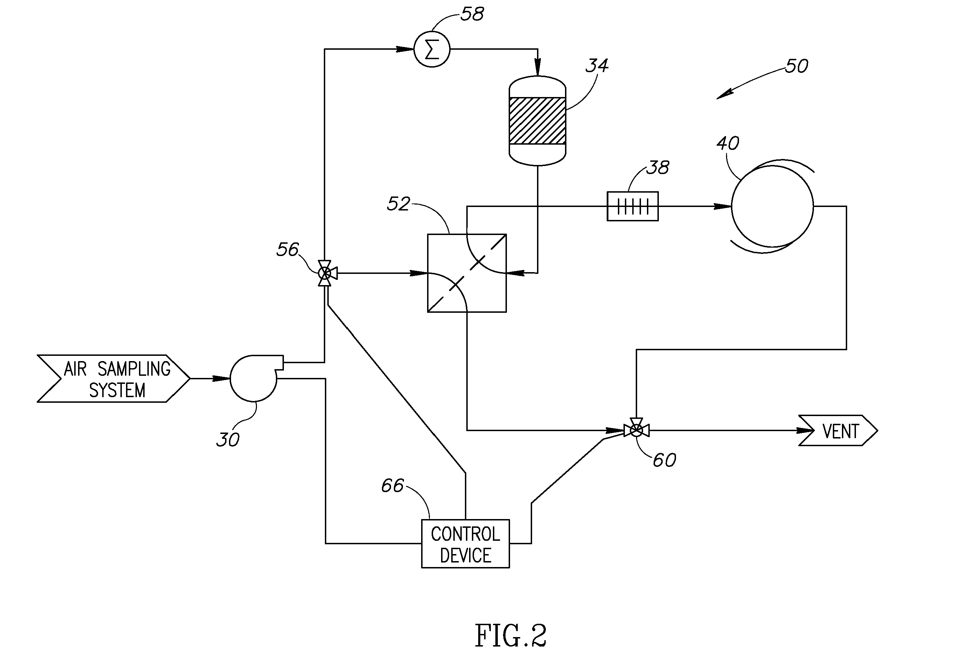

FIGURE 2 illustrates an example system 50 for performing molecular detection, similar to the system 20 shown in FIGURE 1. The system 50 includes the fluid motion generator 30, a filter device 52, the NOx scrubber 34, the heat exchanger 38, the optical resonator detection component 40, a first 3-way valve 56, a second 3-way valve 60, a heater 58 and a control device 66. The heater 58 is positioned before or after the NOx scrubber 34.

The first 3-way valve 56 receives the forced air from the fluid motion generator 30 and sends it to the heater 58/scrubber 34 or the filter device 52 based on control signals sent by the control device 66. The second 3-way valve 60 receives outputs from the filter device 52 or the optical resonator detection component 40 and sends the received outputs to a vent based on control signals sent by the control device 66. The control device 66 may also be connected to the other components of the system 50 for monitoring status and controlling their operation. The system 50 is operated in a two-state cycle - a particulate collection phase and a reactive desorption phase.

During the collection phase of the operation, a sample of air is collected from a source by the fluid motion generator 30 (eg. fan, pump) and sent to the filter device 52 via the first 3-way valve 56. The filter device 52 includes a filter element for trapping desired energetic materials - particulates of explosive that may be present in the collected air stream. After collection for a period of time, preferably from 1 second to 10 minutes, and most preferably from 5 seconds to 10 seconds, the system 50 is switched to the second phase. The filter device 52 then outputs to a vent through the second valve 60.

After collecting the sample of filtered particulates, the first valve 56 is switched so that the filtered air is discharged to the heater 58. The heater 58 increases the temperature of air to a level at which explosive molecules will decompose rapidly to form gasses that include nitrogen dioxide and/or nitric oxide. The temperature is controlled during this part of the cycle in a range of preferably 100°-650°, and most preferably from 200°-300°C. Any source of energy maybe used to provide heat. For example electrical energy, fuel combustion, or vehicle exhaust may be used to provide the heat. In this example, the scrubber 34 (a solidphase scrubber) operating at 250°-300°C is used. The scrubber 34 is designed to remove nitrogen impurities normally present in the air. The scrubber 34 removes nitrogen oxides (NOx) that are normally present in the air but not associated with particles that contain explosives. The scrubber 34 outputs the cleaned air to the filter 52.

The absorbed particles of explosive in the filter 52 are decomposed into decomposition products that contain nitrogen dioxide and nitric oxide. Most conventional explosives such as TNT, RDX, HMX, PETN, nitrocellulose, nitroglycerin, ANFO, and other nitrogen-containing explosives and propellants will produce the nitrogen oxides when thermal decomposition occurs. In this embodiment, the scrubber 34, the heater 58, and filter 52 are contained in a common housing (not shown) to minimize the amount of energy required by preventing loss of heat. In this embodiment, the finned tube heat exchanger 38 reduces the temperature of the gas from the filter device 52 to prevent damage to the optical resonator component 40. The decomposition cooled gas from the heat exchanger 38 is conducted to the optical resonator component 40. The component 40 then outputs to a vent through the second valve 60. The control device 66 provides active control of the temperature of the gas entering the optical resonator and to thereby improve accuracy.
In another embodiment, the system is designed to detect a non-energetic material (one that does not produce NOx upon desorption), such as gasolines, chemical warfare agents, toxic industrial chemicals, pesticides, halogenated solvents, and biological materials. In general, this invention may be used to detect materials such but not limited to the above list in solid, liquid, or vapor phase, and in combination with other materials such as water, dust, soil, or sand. A system of this type would not necessarily need a NOx scrubber and the collection filter may be designed to acquire either particulate materials molecular components, or a combination of molecular and particulate materials. In its most simple form, the filter is simply a mechanical material such as a mesh particulate filter. This may be combined with a molecular filter comprised of a zeolite, silica, alumina, activated carbon, or other suitable molecular adsorbent, which can be designed to adsorb target molecular substrates. In some embodiments, the molecular filter may be used without a separate mechanical filter, while in other embodiments the mechanical and molecular filters may be combined into a single element. This combination may be used to simply release volatile analyte compounds in a manner similar to a purge and trap, which is well known to a person of ordinary skill in the art. Alternatively, the system may be designed to subject the filter to an increasing temperature in a manner that causes pyrolytic decomposition of the analyte to form secondary products (such as NOx), form which the presence of the original compound can be quantitatively inferred. The molecular filter is then heated in order to perform simple desorption (i.e., degassing) of any collected material. The result of the simple desorption is sent to the optical resonator for analysis. The temperature of the fluid conducted to the optical resonator may need to be cooled or conditioned to a range of temperature that will provide acceptable performance for the chemical detector and optics associated with this chemically reactive resonator. The desorption temperature may range between ambient temperature and 600°C, preferably between 0 and 400°C, and most preferably between 100 and 250°C.

## Claims

1. A method for detecting a target material, the method comprising:
passing a sample of fluid through at least one of a filter (52) or an adsorbent bed;
desorbing a material from the sample of fluid absorbed at the filter at a predefined temperature; and
detecting if any desorbed material exists using an optical resonator system (40),
wherein desorbing comprises performing one of simple or pyrolitic desorption of any material included in the filter.

2. The method of Claim 1, further comprising:
cleaning the sample of fluid passed through the filter of a threshold amount of one or more type of atmospheric impurities applying the cleaned sample of fluid to the filter at a predefined temperature,
wherein detecting includes detecting the presence of one or more type of target material.

3. The method of Claim 2, wherein the one or more type of atmospheric impurities includes a nitrogen oxide, wherein cleaning comprises passing the fluid through a NOx scrubber (34).

4. The method of Claim 2, further comprising reducing the temperature of the fluid before passing through the optical resonator system.

5. The method of Claim 1, wherein the optical resonator includes a cladding that reacts optically to presence of the target material.

6. A system for detecting a target material, the system comprising:
fluid motion generator (30) configured to apply a force a sample of fluid;
a material filter (52) configured to received the sample of fluid and absorb at least a portion of a material;
a component configured to desorb the filtered material from the sample of fluid absorbed at the filter at a predefined temperature; and
an optical resonator system (40) configured to detect if any desorbed material exists using an optical resonator system,
wherein the filter performs one of simple or pyrolitic desorption of any material included in the filter.

7. The system of Claim 6, further comprising a cleaning component (34) configured to clean the nonabsorbed sample of fluid of a threshold amount of one or more type of atmospheric impurities apply the cleaned sample of fluid to the filter at a predefined temperature, wherein the optical resonator system detects the presence of one or more type of target material.

8. The system of Claim 7, wherein the one or more type of atmospheric impurities includes a nitrogen oxide, wherein cleaning component includes a NOx scrubber (34).

9. The system of Claim 6, further comprising a heat exchanger (38) configured to reduce the temperature of the desorbed material before passing through the optical resonator system.

10. The system of Claim 6, wherein the optical resonator includes a cladding that reacts optically to presence of the desorbed material.
